# EUROPÄISCHE PATENTANMELDUNG

(11) **EP 3 495 984 A1**
(43) Veröffentlichungstag der Anmeldung: **12.06.2019**
(21) Anmeldenummer: 17205467.8
(22) Anmeldetag: 05.12.2017
(51) Int. Cl.: G06K 7/00

(54) **MANIPULATIONSSICHERER KARTENLESER MIT EINER BOHRSCHUTZABDECKUNG**

(71) Anmelder: ddm hopt + schuler GmbH & Co. KG., 78628 Rottweil (DE)
(72) Erfinder: HOPT, Karl-Rudolf, 78628 Rottweil (DE)
(74) Vertreter: Kohler Schmid Möbus Patentanwälte

(57) **Zusammenfassung**

Bei einem Kartenleser (1) aufweisend eine Kontaktiereinheit (6) zum Datenaustausch mit einer Chipkarte (2) und eine die Kontaktiereinheit (6) abdeckende Kunststoff-Bohrschutzabdeckung (8) mit einer mit Kunststoff hinterspritzten Leiterbahnfolie (9), welche eine flächendeckende Bohrschutz-Leiterbahnstruktur (10) aufweist, ist die Bohrschutz-Leiterbahnstruktur (10) erfindungsgemäß mit einer elektrisch leitenden, transparenten Tinte auf die Leiterbahnfolie (9) aufgebracht, insbesondere aufgedruckt.

## Beschreibung

Die vorliegende Erfindung betrifft einen Kartenleser aufweisend eine Kontaktiereinheit zum Datenaustausch mit einer Chipkarte und eine die Kontaktiereinheit und/oder ein daran angeschlossenes elektronisches Bauteil abdeckende Kunststoff-Bohrschutzabdeckung mit einer kunststoffhinterspritzten Leiterbahnfolie, welche eine flächendeckende Bohrschutz-Leiterbahnstruktur aufweist, sowie auch eine Bohrschutzabdeckung aus Kunststoff, insbesondere Bohrschutzhaube, mit einer kunststoffhinterspritzten Leiterbahnfolie, die eine flächendeckende Bohrschutz-Leiterbahnstruktur aufweist.

Ein Kartenleser mit einer derartigen Abdeckung ist beispielsweise durch die EP 3 196 799 A1 bekannt geworden.

Dieser bekannte Kartenleser weist ein Kunststoffspritzteil in Form einer Bohrschutzhaube mit einer daran vorgesehenen Bohrschutz-Leiterbahnstruktur auf. Die Bohrschutzhaube ist ein spritzgegossenes Kunststoffteil, dessen Innenseite mit einer zweilagigen Leiterbahnfolie hinterspritzt ist, welche eine flächendeckende Bohrschutz-Leiterbahnstruktur mit mindestens einer durchgehenden elektrischen Leiterbahn aufweist. Die Leiterbahnfolie ist mit dem Kunststoffmaterial der Bohrschutzhaube stoffschlüssig verbunden bzw. verschmolzen. Wenn die Bohrschutzhaube zu Manipulationszwecken durchbohrt oder abgeschliffen wird, wird dabei auch die durchgehende Leiterbahn durchtrennt, über die im Betrieb ein Strom fließt. Diese Stromkreisunterbrechung wird von einer Überwachungseinheit erkannt, die dann keinen Lesevorgang mehr zulässt bzw. die Kontaktiereinheit außer Funktion setzt.

Es ist demgegenüber die Aufgabe der vorliegenden Erfindung, einen Kartenleser der eingangs genannten Art noch manipulationssicherer zu machen.

Diese Aufgabe wird erfindungsgemäß dadurch gelöst, dass die Bohrschutz-Leiterbahnstruktur mit einer elektrisch leitenden, transparenten Tinte auf die Leiterbahnfolie aufgebracht, insbesondere aufgedruckt ist. Vorzugsweise weist die Leiterbahnfolie eine ein- oder mehrlagige Bohrschutz-Leiterbahnstruktur auf, die jeweils auf eine Träger- oder eine Zwischenschicht der Leiterbahnfolie aufgebracht, insbesondere aufgedruckt sein kann.

Transparente bzw. klare elektrisch leitende Tinte wird beispielsweise von der Fa. Nanolntegris Technologies, Inc., von der Fa. Henkel unter der Bezeichnung Loctite ECI 5000 und von der Fa. Applied Ink Solutions unter dem Markennamen Orga-Con™ vertrieben. Diese bekannten Tinten enthalten beispielsweise elektrisch leitende Polymere oder Silver Nanowire. Mit diesen elektrisch leitenden Tinten können transparente elektrisch leitende Strukturen bis zu einer Auflösung von 100µm auf flexible und starre Substrate aus z.B. PET, PC, PMMA, PI oder Glas gedruckt werden.

Aufgrund der transparenten Tinte sind die Leiterbahn(en) der aufgedruckten Bohrschutz-Leiterbahnstruktur für einen Betrachter nicht sichtbar und verhindern, weil der zwischen zwei Leiterbahnen vorhandene Zwischenraum nicht erkennbar ist, daher noch wirkungsvoller das unbemerkte Durchbohren der im Betrieb bestromten Bohrschutz-Leiterbahnstruktur.

Die Leiterbahnfolie bildet vorteilhaft die der Kontaktiereinheit oder dem elektronischen Bauteil zugewandte Seite der Bohrschutzabdeckung aus, so dass erst der Kunststoff der Bohrschutzabdeckung entfernt (abgeschliffen) werden müsste, um überhaupt an die Leiterbahnfolie zu gelangen.

Je dünner die Linienstärke der Leiterbahnen und je geringer der Linienabstand zwischen den Leiterbahnen der Bohrschutz-Leiterbahnstruktur, desto besser ist der Manipulationsschutz. Vorteilhaft weist die mindestens eine Bohrschutz-Leiterbahn eine Linienbreite von höchstens 0,2 mm, insbesondere höchstens 0,15 mm, und einen Linienabstand von höchstens 0,3 mm, insbesondere höchstens 0,2 mm, auf.

Der Kartenleser kann auf einer Leiterplatte montiert sein, welche die Bohrschutz-Leiterbahnstruktur elektrisch kontaktiert. Vorzugsweise weist die mindestens eine Bohrschutz-Leiterbahn an ihren beiden Enden jeweils elektrische Anschlusskontakte, insbesondere in Form von freiliegenden elektrischen Kontaktflächen, auf, die von elektrischen Gegenkontakten des Kartenlesers kontaktiert werden, welche wiederum an eine Überwachungseinheit angeschlossen sein können.

Besonders bevorzugt ist die Bohrschutzabdeckung als Bohrschutzhaube ausgebildet, deren Haubeninnen- oder -außenseite durch die Leiterbahnfolie gebildet ist. Bis auf eine Karteneinführöffnung, durch die eine Chipkarte bis in ihre Datenaustauschposition in den Kartenleser eingeführt wird, kann die Kontaktiereinheit von der Bohrschutzhaube vollständig abgedeckt sein.

Die Erfindung betrifft in einem weiteren Aspekt auch eine Bohrschutzabdeckung aus Kunststoff zum Schutz von elektronischen Bauteilen oder von Datenleitungen mit einer kunststoffhinterspritzten Leiterbahnfolie, die eine flächendeckende Bohrschutz-Leiterbahnstruktur aufweist, welche erfindungsgemäß mit einer elektrisch leitenden, transparenten Tinte auf die Leiterbahnfolie aufgebracht, insbesondere aufgedruckt ist. Vorzugsweise weist die Leiterbahnfolie eine ein- oder mehrlagige Bohrschutz-Leiterbahnstruktur auf, die jeweils auf eine Träger- oder eine Zwischenschicht der Leiterbahnfolie aufgebracht, insbesondere aufgedruckt ist.

Aufgrund der transparenten Tinte ist die aufgedruckte Bohrschutz-Leiterbahnstruktur für einen Betrachter nicht sichtbar und verhindert das unbemerkte Durchbohren der im Betrieb bestromten Bohrschutz-Leiterbahnstruktur zusätzlich. Bei den elektronischen Bauteilen kann es sich beispielsweise um Prozessoren handeln, welche die auszutauschenden Daten verschlüsseln, und bei den Datenleitungen um elektrische Leitungen handeln.

Vorzugsweise weist die Bohrschutz-Leiterbahnstruktur mindestens eine Bohrschutz-Leiterbahn mit einer Linienstärke von höchstens 0,2 mm, insbesondere höchstens 0,15 mm, und mit einem Linienabstand von höchstens 0,3 mm, insbesondere höchstens 0,2 mm, auf. Vorteilhaft kann die mindestens eine Bohrschutz-Leiterbahn an ihren beiden Enden jeweils elektrische Anschlusskontakte aufweisen, insbesondere in Form von freiliegenden elektrischen Kontaktflächen. Besonders bevorzugt ist die Bohrschutzabdeckung als Bohrschutzhaube ausgebildet ist, deren Haubeninnen- und/oder -außenseite durch die Leiterbahnfolie gebildet ist.

Weitere Vorteile der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigen:
- Fig. 1: eine perspektivische Ansicht von oben auf den erfindungsgemäßen Kartenleser, der unten von einer Bohrschutzhaube abgedeckt ist;
- Fig. 2: eine perspektivische Ansicht von oben auf die in Fig. 1 gezeigte Bohrschutzhaube, deren Haubeninnenseite durch eine kunststoffhinterspritzte Leiterbahnfolie gebildet ist;
- Fig. 3: die Leiterbahnfolie von Fig. 2 als ebener Folienzuschnitt; und
- Fign. 4a, 4b: eine Leiterbahnfolie mit einer einlagigen Bohrschutz-Leiterbahnstruktur (Fig. 4a) oder mit einer zweilagigen Bohrschutz-Leiterbahnstruktur (Fig. 4b), jeweils im Querschnitt.

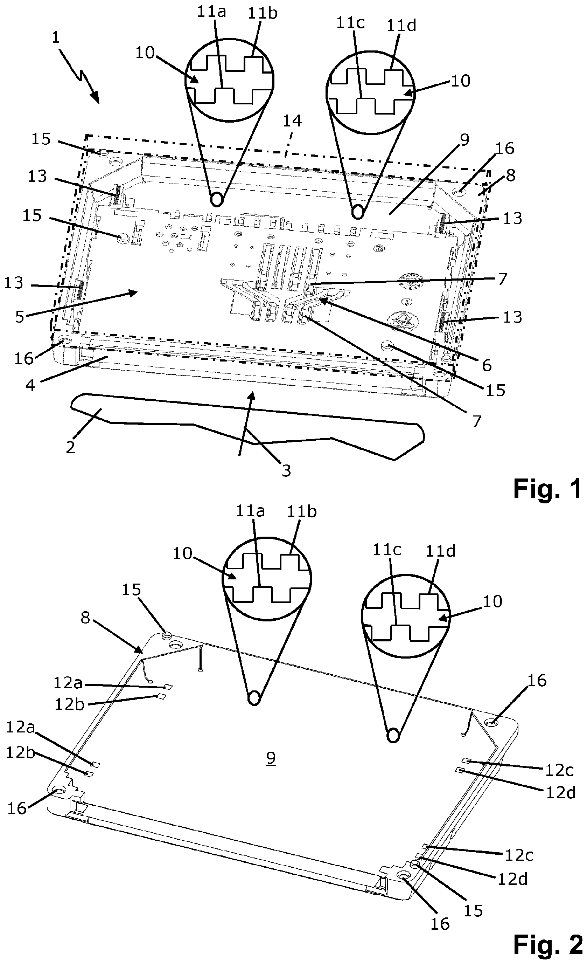

Der in **Fig. 1** gezeigte Kartenleser **1** ist ein so genannter Push/Pull-Kartenleser, bei dem eine Chipkarte **2** durch den Benutzer in Einführrichtung **3** über eine Karteneinführöffnung **4** in den Kartenschacht eines Kontaktträgers **5** (oder eines Kartenlesergehäuses) bis in die Datenaustauschposition eingeführt und nach dem Datenaustausch vom Benutzer wieder aus dem Kartenleser 1 herausgezogen wird. Die Chipkarte 2 trägt zum Speichern der Daten einen Mikrochip (nicht gezeigt), dessen Kontakte als elektrische Kontaktfelder (nicht gezeigt) auf der Kartenoberfläche vorgesehen sind. Am Kontaktträger 5 ist eine Kontaktiereinheit **6** zum Datenaustausch mit der durch die Karteneinführöffnung 4 in den Kartenschacht eingeführten Chipkarte 2 angeordnet. Die Kontaktiereinheit 6 weist mehrere elastisch verformbare Kontaktfedern **7** auf, die mit ihren freien Kontaktenden in die Kartenbahn hineinragen. Durch die eingeführte Chipkarte 2 werden die freien Kontaktenden der Kontaktfedern 7 aus der Kartenbahn ausgelenkt und kontaktieren die elektrischen Kontaktfelder der Chipkarte 2.

Der Kontaktträger 5 samt Kontaktiereinheit 6 ist unterseitig von einer Bohrschutzabdeckung aus Kunststoff in Form einer Bohrschutzhaube **8** abgedeckt, deren Haubeninnenseite durch eine kunststoffhinterspritzte Leiterbahnfolie **9** gebildet ist **(****Fig. 2****).** Der Kontaktträger 5 ist in die Bohrschutzhaube 8 positionsgenau eingelegt und daran befestigt.

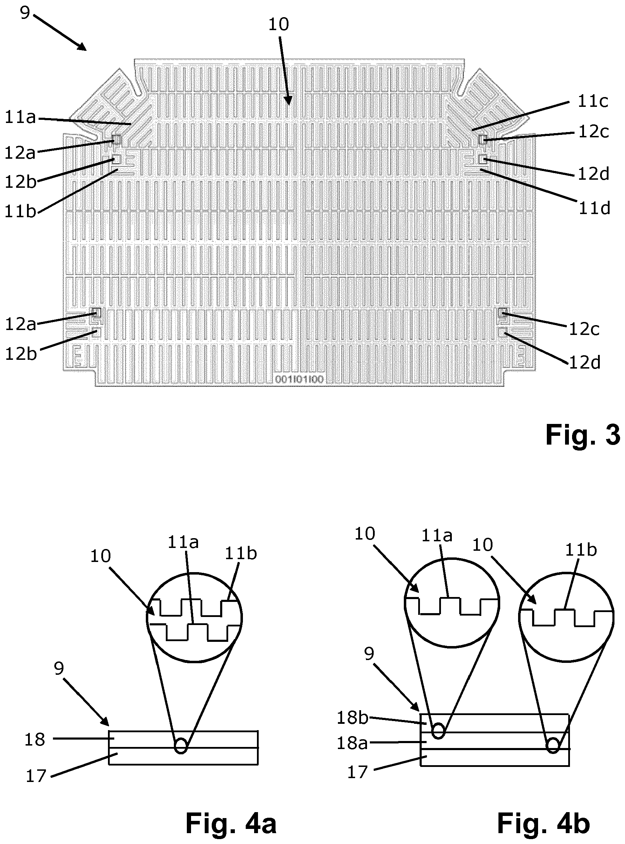

Die flexible Leiterbahnfolie 9 ist in **Fig. 3** als ebener Folienzuschnitt gezeigt. Auf der Leiterbahnfolie 9 ist mindestens eine flächendeckende Bohrschutz-Leiterbahnstruktur **10** in Form von vier mäanderförmigen Bohrschutz-Leiterbahnen **11a-11d** mit einer transparenten elektrisch leitenden Tinte aufgedruckt, deren Linienbreite höchstens 0,2 mm und deren Linienabstand zueinander höchstens 0,3 mm beträgt. Aufgrund der transparenten Tinte sind die aufgedruckte Bohrschutz-Leiterbahnstruktur 10 bzw. ihre Bohrschutz-Leiterbahnen 11a-11d für einen Betrachter nicht sichtbar. Zwei Bohrschutz-Leiterbahnen 11a, 11b sind auf der in Fig. 3 linken Hälfte und zwei Bohrschutz-Leiterbahnen 11c, 11d sind auf der rechten Hälfte der Leiterbahnfolie 9 angeordnet.

Die aufgerichtete Leiterbahnfolie 9 wird in das Spritzwerkzeug der Bohrschutzhaube 8 eingelegt, wobei die Seitenwände der aufgerichteten Leiterbahnfolie 9 miteinander überlappen, damit die aufgerichtete Leiterbahnfolie 9 flächendeckend eine lückenlose Bohrschutz-Leiterbahnstruktur 10 aufweist. Beim anschließenden In-Mold-Spritzgießvorgang wird die Leiterbahnfolie 9 mit Kunststoff hinterspritzt, die dann die Haubeninnenseite bildet, wie in Fig. 2 gezeigt ist. Jede der vier aufgedruckten Bohrschutz-Leiterbahnen 11a-11d weist an ihren beiden Enden zwei Anschlusskontakte **12a-12d** in Form von freiliegenden elektrischen Kontaktflächen an der Haubeninnenseite auf.

An der Unterseite des Kontaktträgers 5 sind vier Gegenkontakte 13 in Form von Doppelkontaktpads angebracht, welche jeweils zwei der insgesamt acht Anschlusskontakte 12a-12d der Bohrschutzhaube 8 kontaktieren. Die Gegenkontakte 13 sind seitlich neben dem Kontaktträger 5 nach oben bis oberhalb des Kontaktträgers 5 geführt.

Wie in Fig. 1 gezeigt, ist die Bohrschutzhaube 8 samt Kontaktiereinheit 6 an der Unterseite einer strichpunktiert angedeuteten Leiterplatte **14** befestigt, und zwar positionsgenau mithilfe von Positioniervorsprüngen **15** am Kontaktträger 5 und an der Bohrschutzhaube 8, welche in entsprechende Öffnungen der Leiterplatte 14 eingreifen. Die Bohrschutzhaube 8 ist über Schrauben, die durch Löcher **16** in den vier Ecken der Bohrschutzhaube 8 gehen, an die Leiterplatte 14 angeschraubt.

Wie in **Fig. 4a** gezeigt, kann die Leiterbahnfolie 9 eine einlagige Bohrschutz-Leiterbahnstruktur 10 mit einer oder mehreren Bohrschutz-Leiterbahnen 11a, 11b aufweisen, welche mit der transparenten Tinte auf eine Trägerschicht **17** der Leiterbahnfolie 9 aufgedruckt sind. Die bedruckte Seite der Trägerschicht 17 ist mit einer Schutzschicht **18** abgedeckt, so dass beim Spritzgießen der Bohrschutzhaube 8 die Bohrschutz-Leiterbahnen 11a, 11b geschützt sind und eine der beiden Schichten 17, 18 stoffschlüssig mit dem Kunststoff verbunden wird.

In **Fig. 4b** weist die Leiterbahnfolie 9 eine zweilagige Bohrschutz-Leiterbahnstruktur 10 mit jeweils einer oder mehreren Bohrschutz-Leiterbahnen 11a, 11b auf. Auf die Trägerschicht 17 ist mit der transparenten Tinte eine Bohrschutz-Leiterbahn 11a (oder meherere) aufgedruckt, die mit einer ersten, inneren Schutzschicht **18a** abgedeckt sind. Auf diese innere Schutzschicht 18a ist mit der transparenten Tinte eine Bohrschutz-Leiterbahn 11b (oder meherere) aufgedruckt, die mit einer zweiten, äußeren Schutzschicht **18b** abgedeckt sind. Beim Spritzgießen der Bohrschutzhaube 8 sind die Bohrschutz-Leiterbahnen 11a, 11b geschützt und die Träger- oder die äußere Schutzschicht 17, 18b wird stoffschlüssig mit dem Kunststoff verbunden.

Wenn zu Manipulationszwecken die Bohrschutzhaube 8 von außen durchbohrt oder abgeschliffen wird, wird dadurch zwangsläufig ihre nichtsichtbare Bohrschutz-Leiterbahnstruktur 10 zerstört, über die im Betrieb ein Strom fließt, und folglich wird der bis dahin geschlossene Stromkreis unterbrochen. Dies wird von einer Überwachungseinheit (nicht gezeigt) der Leiterplatte 14 erkannt, die dann keinen Lesevorgang mehr zulässt bzw. die Kontaktiereinheit 6 außer Funktion setzt. Wenn zu Manipulationszwecken die Bohrschutzhaube 8 von der Leiterplatte 14 abgehoben wird, wird dadurch zwangsläufig der elektrische Kontakt zwischen den Anschlusskontakten 12a-12d der Bohrschutzhaube 8 und den Gegenkontakten 13 des Kontaktträgers 5 unterbrochen und folglich der bis dahin geschlossene Stromkreis unterbrochen. Auch dies wird von der Überwachungseinheit erkannt, die dann keinen Lesevorgang mehr zulässt bzw. die Kontaktiereinheit 6 außer Funktion setzt. Eine unbemerkte Manipulation am Kartenleser 1 ist somit nicht möglich, wodurch ein "sicherer Kartenleser (secure card reader)" bereitgestellt ist.

## Patentansprüche

1. Kartenleser (1) aufweisend eine Kontaktiereinheit (6) zum Datenaustausch mit einer Chipkarte (2) und eine die Kontaktiereinheit (6) und/oder ein daran angeschlossenes elektronisches Bauteil abdeckende Kunststoff-Bohrschutzabdeckung (8) mit einer kunststoffhinterspritzten Leiterbahnfolie (9), welche eine flächendeckende Bohrschutz-Leiterbahnstruktur (10) aufweist,
**dadurch gekennzeichnet,**
**dass** die Bohrschutz-Leiterbahnstruktur (10) mit einer elektrisch leitenden, transparenten Tinte auf die Leiterbahnfolie (9) aufgebracht, insbesondere aufgedruckt ist.

2. Kartenleser nach Anspruch 1, **dadurch gekennzeichnet, dass** die Leiterbahnfolie (9) eine ein- oder mehrlagige Bohrschutz-Leiterbahnstruktur (10) aufweist, die jeweils auf eine Träger- oder eine Schutzschicht (17; 18a) der Leiterbahnfolie (9) aufgebracht, insbesondere aufgedruckt ist.

3. Kartenleser nach Anspruch 1 oder 2, **dadurch gekennzeichnet, dass** die Leiterbahnfolie (9) die der Kontaktiereinheit (6) oder dem elektronischen Bauteil zugewandte Seite der Bohrschutzabdeckung (8) ausbildet.

4. Kartenleser nach einem der vorhergehenden Ansprüche, **dadurch gekennzeichnet, dass** die Bohrschutz-Leiterbahnstruktur (10) mindestens eine Bohrschutz-Leiterbahn (11a-11d) mit einer Linienstärke von höchstens 0,2 mm, insbesondere höchstens 0,15 mm, und mit einem Linienabstand von höchstens 0,3 mm, insbesondere höchstens 0,2 mm, aufweist.

5. Kartenleser nach Anspruch 4, **dadurch gekennzeichnet, dass** die mindestens eine Bohrschutz-Leiterbahn (11a-11d) an ihren beiden Enden jeweils elektrische Anschlusskontakte (12a-12d), insbesondere in Form von freiliegenden elektrischen Kontaktflächen, aufweist.

6. Kartenleser nach Anspruch 5, **dadurch gekennzeichnet, dass** ein die Kontaktiereinheit (6) tragender Kontaktträger (5) elektrische Gegenkontakte (13) aufweist, welche die Anschlusskontakte (12a-12d) der mindestens einen Bohrschutz-Leiterbahn (11a-11d) kontaktieren.

7. Kartenleser nach einem der vorhergehenden Ansprüche, **dadurch gekennzeichnet, dass** die Bohrschutzabdeckung als Bohrschutzhaube (8) ausgebildet ist, deren Haubeninnen- oder -außenseite durch die Leiterbahnfolie (9) gebildet ist.

8. Kartenleser nach Anspruch 7, **dadurch gekennzeichnet, dass** die Kontaktiereinheit (6) von der Bohrschutzhaube (8) bis auf eine Karteneinführöffnung (4), durch die eine Chipkarte (2) bis in ihre Datenaustauschposition in den Kartenleser (1) eingeführt wird, vollständig abgedeckt ist.

9. Kartenleser nach einem der vorhergehenden Ansprüche, **dadurch gekennzeichnet, dass** der Kartenleser (1) auf einer Leiterplatte (14) montiert ist, welche die Bohrschutz-Leiterbahnstruktur (10) elektrisch kontaktiert.

10. Bohrschutzabdeckung (8) aus Kunststoff, insbesondere Bohrschutzhaube, mit einer kunststoffhinterspritzten Leiterbahnfolie (9), die eine flächendeckende Bohrschutz-Leiterbahnstruktur (10) aufweist,
**dadurch gekennzeichnet,**
**dass** die Bohrschutz-Leiterbahnstruktur (10) mit einer elektrisch leitenden, transparenten Tinte auf die Leiterbahnfolie (9) aufgebracht, insbesondere aufgedruckt ist.

11. Bohrschutzabdeckung nach Anspruch 10, **dadurch gekennzeichnet, dass** die Leiterbahnfolie (9) eine ein- oder mehrlagige Bohrschutz-Leiterbahnstruktur (10) aufweist, die jeweils auf eine Träger- oder eine Schutzschicht (17; 18a) der Leiterbahnfolie (9) aufgebracht, insbesondere aufgedruckt ist.

12. Bohrschutzabdeckung nach Anspruch 10 oder 11, **dadurch gekennzeichnet, dass** die Bohrschutz-Leiterbahnstruktur (10) mindestens eine Bohrschutz-Leiterbahn (11a-11d) mit einer Linienstärke von höchstens 0,2 mm, insbesondere höchstens 0,15 mm, und mit einem Linienabstand von höchstens 0,3 mm, insbesondere höchstens 0,2 mm, aufweist.

13. Bohrschutzabdeckung nach einem der Ansprüche 10 bis 12, **dadurch gekennzeichnet, dass** die mindestens eine Bohrschutz-Leiterbahn (11a-11d) an ihren Enden jeweils elektrische Anschlusskontakte (12a-12d), insbesondere in Form von freiliegenden elektrischen Kontaktflächen, aufweist.

14. Bohrschutzabdeckung nach einem der Ansprüche 10 bis 13, **dadurch gekennzeichnet, dass** die Bohrschutzabdeckung als eine Bohrschutzhaube (8) ausgebildet ist, deren Haubeninnen- und/oder -außenseite durch die Leiterbahnfolie (9) gebildet ist.
